# EUROPEAN PATENT SPECIFICATION

(11) **EP 3 046 889 B1**
(45) Date of publication and mention of the grant of the patent: **28.10.2020**
(21) Application number: 14845295.6
(22) Date of filing: 05.09.2014
(51) Int. Cl.: C04B 35/628, C04B 38/08, C04B 38/00

(54) **METHOD OF FABRICATING A CERAMIC ARTICLE**
VERFAHREN ZUR HERSTELLUNG EINES KERAMISCHEN ARTIKELS
PROCÉDÉ DE FABRICATION D'UN ARTICLE EN CÉRAMIQUE

(30) Priority: 19.09.2013 US 201361879765 P
(43) Date of publication of application: 27.07.2016
(73) Proprietor: United Technologies Corporation, Farmington, CT 06032 (US)
(72) Inventor: SCHMIDT, Wayde R., Pomfret Center, Connecticut 06259 (US); SHEEDY, Paul, Bolton, Connecticut 06043 (US); KASHYAP, Tania Bhatia, West Hartford, Connecticut 06107 (US)
(74) Representative: Dehns
(86) International application number: PCT/US2014/054254
(87) International publication number: WO 2015/041869

(56) References cited:
- EP-A2- 2 447 029
- US-A1- 2003 054 188
- US-A1- 2003 175 453
- US-A1- 2008 143 005
- US-A1- 2013 085 057
- US-B1- 6 517 953
- XU Y ET AL: "Carbon/silicon carbide composites prepared by chemical vapor infiltration combined with silicon melt infiltration", CARBON, ELSEVIER, OXFORD, GB, vol. 37, no. 8, 1 January 1999 (1999-01-01), pages 1179-1187, XP004169418, ISSN: 0008-6223, DOI: 10.1016/S0008-6223(98)00310-8

## Description

### BACKGROUND

This disclosure pertains to ceramic composites. Ceramic composites are fabricated using a technique such as polymer infiltration and pyrolysis, melt infiltration, slurry infiltration, slip casting, tape casting, injection molding, dry pressing, isostatic pressing, hot isostatic pressing and others. The selected processing technique controls the chemistry and microstructure of the ceramic composite and thus can also limit the chemistry and microstructure. Xu Y et al.: "Carbon/silicon carbide composites prepared by chemical vapor infiltration combined with silicon melt infiltration", Carbon, Elsevier, Oxford, GB, vol. 37, no. 8, 1 January 1999 (1999-01-01), pages 1179-1187, discloses a method of forming a C/SiC ceramic article by way of sequentially depositing into the pores of a matrix preform at least three layers of different material composition.

### SUMMARY

A method of fabricating a ceramic article according to the invention includes serially depositing first, second and third different materials within a porous structure using, respectively, first, second and third different processing techniques wherein the first and third processing techniques are selected from the group consisting of chemical vapor infiltration of a gas, melt infiltration of a metallic material and vapor infiltration of a metallic material, and the second processing technique is polymer infiltration and pyrolysis using a heating rate of 5°C/min or greater, to form a ceramic article, the first, second and third different materials differ by at least one of: composition and microstructure, the depositing of the first material is controlled such that there are first residual voids in the porous structure into which the second material is deposited and the depositing of the second material is controlled such that there are second residual voids in the porous structure into which the third material is deposited.

A further embodiment of any of the foregoing embodiments includes selecting respective compositions of at least two materials of the first, second and third different materials to be reactive with each other during the deposition.

A further embodiment of any of the foregoing embodiments includes selecting respective compositions of at least two of the first, second and third different materials to be chemically inert with each other during the deposition.

In a further embodiment of any of the foregoing embodiments, the first residual voids are interconnected pores that are unfilled by the first material and the second residual voids are micro-cracks within the second material.

In a further embodiment of any of the foregoing embodiments, the first residual voids and the second residual voids are interconnected pores, the interconnected pores of the second residual voids being within the second material.

In a further embodiment of any of the foregoing embodiments, the porous structure is a fiber structure.

In a further embodiment of any of the foregoing embodiments, the deposition of the first material provides a continuous coating on the porous structure.

In a further embodiment of any of the foregoing embodiments, the third processing technique includes one of the melt infiltration of the metallic material or the vapor infiltration of the metallic material.

In a further embodiment of any of the foregoing embodiments, the second processing technique includes the deposition of a preceramic polymer including a filler that chemically reacts with at least one of the first material and the third material.

In a further embodiment of any of the foregoing embodiments, at least one of the first, second and third different processing techniques includes chemically reacting a precursor material deposited thereby with a residual amount of unreacted precursor material from another of the first, second and third different processing techniques.

In a further embodiment of any of the foregoing embodiments, the first, second and third different processing techniques are, respectively, the chemical vapor infiltration of the gas, the polymer infiltration and pyrolysis of the polymer and one of the melt infiltration of the metallic material or the vapor infiltration of the metallic material.

In a further embodiment of any of the foregoing embodiments, the third processing technique is one of the melt infiltration of the metallic material or the vapor infiltration of the metallic material.

In a further embodiment of any of the foregoing embodiments, the ceramic article is substantially fully dense and substantially free of voids.

In a further embodiment of any of the foregoing embodiments, the porous structure is an unstable fiber structure and the first processing technique provides a continuous layer of the first material that rigidizes the fiber structure such that the fibers maintain a desired fiber arrangement upon the second and third processing techniques.

A ceramic article fabricated by a method according to an example of the present disclosure includes serially depositing first, second and third different materials within a porous structure using, respectively, first, second and third different processing techniques, to form a ceramic article. The first, second and third different materials differ by at least one of composition and microstructure. The first, second and third different processing techniques differ by at least one of modes of delivery of precursor materials into the porous structure and formation mechanisms of the first, second and third different materials from the precursor materials. The depositing of the first material is controlled such that there are first residual voids in the porous structure into which the second material is deposited and the depositing of the second material is controlled such that there are second residual voids in the porous structure into which the third material is deposited.

In a further embodiment of any of the foregoing embodiments, the ceramic article includes the porous structure with the first material disposed in voids of the porous structure, the second material disposed at least in the first residual voids of the porous structure and the third material disposed in at least the second residual voids in the porous structure

### DETAILED DESCRIPTION

Disclosed herein is a method of fabricating a ceramic article. As will be appreciated, the method provides a synergistic effect of at least three different processing techniques to form a ceramic article that can have enhanced densification, thermal conductivity or other target property for a desired end use, such as in a turbine engine. For example, the ceramic article fabricated according to this disclosure can be a fiber-reinforced ceramic matrix composite, but is not limited to such a structure.

As used herein, a ceramic material is an inorganic, non-metallic compound having metallic and non-metallic elements that have mixed ionic and covalent bonding, depending on the particular ceramic. In further examples, the ceramic material can have a crystalline, partly crystalline, amorphous (glassy) or partly amorphous microstructure. In further examples, the ceramic article can be entirely or predominantly, by weight, ceramic material. If not entirely ceramic, the ceramic article can also include metallic or intermetallic phases and/or free carbon phases. In one example, the ceramic article fabricated according to this disclosure is a fiber-reinforced ceramic matrix composite. The ceramic matrix can be entirely ceramic material or can include continuous or discontinuous metallic and/or intermetallic phases and/or free carbon phases. The carbon phases can include glassy carbon, graphitic carbon, graphene, fullerenes or diamond. In one further example, the ceramic matrix includes at least one continuous phase in which the fiber reinforcement is dispersed.

An example of the method includes serially depositing first, second and third different materials within a porous structure using, respectively, first, second and third different processing techniques. In one example, the porous structure is a fiber structure. The fiber structure can be a woven structure, but is not limited to such an arrangement. The fibers can be ceramic fibers, carbon fibers, glass fibers, metal fibers or combinations thereof, but are not limited to such fibers. In gas turbine engines and other applications subject to severe operating conditions, silicon carbide, silicon carbide nitride and/or carbon fibers are useful.

The fibers can include core fibers and, optionally, one or more interface layers on the outside of the fibers that serve as interfacial layers with a deposited matrix. Such interface layers are known and can be used to provide desired weak interfacial bonding between the fibers and matrix, environmental protection of the fibers and/or other functions related to a particular end use. Example interface layers can be single or multilayer arrangements of layers of any of carbon, boron nitride, silicon carbide, and silicon nitride, but are not limited to such materials.

The first, second and third materials differ by at least one of composition and microstructure. Composition refers to a representative chemical formulation of atoms of the material, and compositions that include common elements are considered different if the numbers of atoms of that element differ in the chemical formulation. Similarly, materials that include common elements with the same number of atoms of a common element in the chemical formulations are considered different if the microstructural arrangement of the common element atoms with respect to other element atoms in the chemical formulation differ. Microstructure refers to observable or detectable features of a phase or region of a material. For example, microstructures can differ by crystalline arrangements of atoms.

The first, second and third different processing techniques differ by at least one of modes of delivery of precursor materials into the porous structure and formation mechanisms of the first, second and third different materials from the precursor materials. The term "processing technique" thus refers to the kind of technique, rather than to variations between specific, but similar processes. In this regard, different processing techniques can differ in the way that precursor material or materials are delivered into the porous structure.

The processing techniques can further or alternatively differ by the formation mechanisms of the materials, and preferably of ceramic materials, from the precursor material(s) used in the particular technique. Thus, different formation mechanisms can include, but are not limited to, formation by thermal pyrolysis in which a precursor decomposes to a final material (e.g., a ceramic) or intermediate material, by mere nonreactive solidification from a liquid melt, by gas phase reaction between precursor gases and condensation of the reaction product, and by mere gas phase condensation of a non-reacted gaseous precursor, for example.

Additionally, in some examples, although some characteristics may differ between two specific processes, such characteristics do not necessarily differentiate the two processes when the modes of delivery of the precursor material(s) are the same or the formation mechanisms are the same. For instance, one melt infiltration technique is not different from another merely because the temperatures of the infiltrations differ, nor are two polymer infiltration techniques different merely because different compositions of polymer precursors are used. However, polymer infiltration/pyrolysis is a different processing technique than simple melt or vapor infiltration, even though each includes infiltration, because the infiltrations ultimately utilize different formation mechanisms to obtain a final material (pyrolysis versus mere solidification). Given this description, one of ordinary skill in the art will be able to distinguish different processing techniques that may be of interest.

The depositing of the first material in the porous structure is controlled such that there are first residual voids in the porous structure, in which the second material is later deposited. The depositing of the second material is also controlled such that there are second residual voids in the porous structure in which the third material is later deposited. Thus, whereas the objective in using an individual processing technique alone would be to avoid the formation of residual voids, the processing techniques used herein are, contrary to normal objectives when using an individual processing technique alone, adapted to produce residual voids in order to accommodate later-deposited materials. Void formation can be controlled by including pore-formers, controlling shrinkage, reactions that create a removable phase or inclusions of phases that can be removed by way of dissolution, volatilization, melting and related methods.

The materials selected to be deposited using the different processing techniques, along with the particular order in which the techniques are used to serially deposit the different materials, can be selected to enhance a target property or properties of the ceramic article, such as but not limited to enhancement of densification and enhancement of thermal conductivity.

In one example, the first processing technique is chemical vapor infiltration of a ceramic precursor gas to deposit a ceramic material, the second processing technique is polymer infiltration/pyrolysis of a preceramic polymer to deposit a ceramic material and the third processing technique is one of melt infiltration of a metallic material or vapor infiltration of a metallic material. The techniques are conducted serially such that the materials are deposited serially in the porous structure. For instance, the chemical vapor infiltration of a ceramic precursor gas or other gas is used to first deposit a relatively thin layer. The thin layer can be a ceramic, such as silicon carbide, silicon nitride, boron nitride, boron carbide, or graphite or other carbon phases, but are not limited to such materials. The process is, contrary to normal objectives, stopped such that the porous structure is incompletely filled with the deposited ceramic material. Thus, there are first residual voids in the porous structure for receiving the second material. Additionally, using chemical vapor deposition can allow for a [PS1]matrix portion adjacent fibers of a fiber structure, providing good protection for the fibers and interface coating, along with a high thermal conductivity pathway. However, chemical vapor deposition can be deficient in forming fully dense matrices, especially for relatively large and complex geometry parts, often "canning off' regions of the material and preventing further infiltration. The resulting closed pores can be angular and can limit the strength of the material. Therefore, the chemical vapor infiltration process can be stopped, prematurely before reaching the point of "canning off' and a second process is then be used to further densify the bulk of the matrix.

In one example, the first residual voids include an interconnected porosity that permits at least the second material to infiltrate throughout the porous structure. Additionally, the deposition of the first material in the first processing technique can also serve to rigidize the porous structure and, depending upon the selected material that is deposited, provide a continuous thermally conductive layer within the porous structure. For instance, the rigidization is one non-limiting example of the synergy of using multiple processing techniques. The rigidization can be used to stabilize an otherwise unstable fiber structure so that the fibers do not move, or do not substantially move, from the desired arrangement upon being handled in or subjected to the subsequent processing techniques.

The second processing technique is polymer infiltration/pyrolysis, in which a preceramic polymer is deposited at least into the first residual voids in the porous structure. The preceramic polymer can be selected such that it converts to a desired ceramic material phase or phases upon pyrolysis. In some examples, the preceramic polymer converts to silicon carbide, silicon nitride, silicon oxycarbide or combinations thereof. In this regard, the pyrolysis temperature and environment can be controlled according to the selected preceramic polymer to obtain the desired ceramic material phase or phases and/or desired microstructure. In a further example, the preceramic polymer can be a blend of two or more different preceramic polymers to provide two or more different ceramic material phase compositions or microstructures.

The composition of the second material deposited by the polymer infiltration/pyrolysis process and/or process parameters can also be selected to produce certain types of the second residual voids, such as a preferred configuration of micro-cracks, for receiving the later-deposited third material. A typical matrix deposited by polymer infiltration/pyrolysis is selected to increase in density by volatilization of pyrolysis byproducts, resulting in a controlled shrinkage of nominally 40-70 vol%, and resulting in formation of distributed pores and microcracks. In such cases, the thermal profile may be adjusted, such as with a faster heating rate, to alter these pyrolysis reactions, thereby resulting in changes in the morphology and or amount of porosity and microcracking. The heating rates of 5°C/minute or greater can cause more rapid volatilization of the pyrolysis byproducts and result in the formation of pores and micro-cracks with larger dimensions. In other examples, the preferred porosity and/or microcracking configuration can be created via the use of polymers which contain up to 20 vol% of a filler that can be removed subsequently by dissolution in a solvent or by volatilization by exposure to heat or vacuum. The microcracks and porosity created can provide infiltration passages for the infiltration of the later-deposited third material. Additionally, the polymer infiltration/pyrolysis process can be terminated prematurely to allow sufficient porosity and microcracking for the third material to later be deposited. In one example, the polymer infiltration/pyrolysis process is conducted such that only the very periphery of the article is capable of being infiltrated with a third material, such as silicon (melt), in order to limit the amount of residual metal phase in the composite, and simultaneously seal the surface of the article for improved long term durability (e.g. oxidation resistance). In other examples, the final stages of polymer infiltration/pyrolysis process can be conducted to allow only for limited infiltration of the later, third material at the periphery, which seals the surface and simultaneously reacts with the infiltrating metal to result in little to no residual metal remaining. In other examples, the later, third material infiltrates throughout the entire article, again sealing the porosity, and may or may not react partially or completely.

In further examples, one or more preceramic polymers can be filled with a reactive or inert filler. In the case of a reactive filler, the composition of the reactive filler can be selected to chemically react with the selected composition of the first material from the first processing technique and/or the composition of the third material of the later, third processing technique. This provides the ability to form additional ceramic phases in the ceramic article to further alter the properties of the article as desired and is another non-limiting example of the synergy of using multiple processing techniques. In the case of an inert filler, the composition of the inert filler is can be selected in accordance with the compositions of either or both of the first and third materials so that the inert filler does not react or substantially react with the first and/or third materials. In this way, the composition and microstructure of the inert filler is preserved in the final ceramic article and is another non-limiting example of the synergy of using multiple processing techniques to avoid reactions that could otherwise debit the final ceramic article.

The third processing technique in this example is one of melt infiltration of a metallic material or vapor infiltration of a metallic material. For example, liquid or vaporized free silicon metal (which can also be referred to as a metalloid) is infiltrated into the second residual voids. The free silicon metal can fully or partially react with either or both of the first and second materials, or constituents thereof, to provide a desired ceramic phase. For example, free silicon metal deposited to react with carbon from the first and/or second material to form silicon carbide. In a further example, the preceramic polymer used in the polymer infiltration/pyrolysis process of the second technique can be composed to provide a stoichiometric excess of carbon upon pyrolysis conversion for *in-situ* reaction with the free silicon metal or other metallic material deposited in the third processing technique. The *in-situ* reaction is another non-limiting example of the synergy of using multiple processing techniques.

The melt infiltration or vapor infiltration of the metallic material is used in this example as the last processing technique. Using the melt or vapor infiltration as the last of the processing techniques avoids temperature or other processing limitations that may otherwise limit later processing techniques if melt or vapor infiltration were not last. Furthermore, the melt of vapor infiltration can be used as the last processing technique to fully densify the ceramic article such that it is free or substantially free of any voids. For comparison, a combination of only two processing techniques, such as chemical vapor infiltration and polymer infiltration/pyrolysis, may be unable to close all residual porosity. However, the last technique of melt or vapor infiltration can be used to fill any remaining voids to achieve a fully or substantially fully dense article and is another non-limiting example of the synergy of using multiple processing techniques.

Although a combination of features is shown in the illustrated examples, not all of them need to be combined to realize the benefits of various embodiments of this disclosure. Moreover, selected features of one example embodiment may be combined with selected features of other example embodiments.

The preceding description is exemplary rather than limiting in nature.

## Claims

1. A method of fabricating a ceramic article, the method comprising:
serially depositing first, second and third different materials within a porous structure using, respectively, first, second and third different processing techniques wherein the first and third processing techniques are selected from the group consisting of chemical vapor infiltration of a gas, melt infiltration of a metallic material and vapor infiltration of a metallic material, and the second processing technique is polymer infiltration and pyrolysis using a heating rate of 5°C/min or greater, to form a ceramic article, the first, second and third different materials differing by at least one of:
composition and
microstructure,
the depositing of the first material being controlled such that there are first residual voids in the porous structure into which the second material is deposited and the depositing of the second material being controlled such that there are second residual voids in the porous structure into which the third material is deposited.

2. The method as recited claim 1, further comprising selecting respective compositions of at least two materials of the first, second and third different materials to be reactive with each other during the deposition, or
further comprising selecting respective compositions of at least two of the first, second and third different materials to be chemically inert with each other during the deposition.

3. The method as recited in claim1 or claim 2, wherein the first residual voids are interconnected pores that are unfilled by the first material and the second residual voids are micro-cracks within the second material, or
wherein the first residual voids and the second residual voids are interconnected pores, the interconnected pores of the second residual voids being within the second material.

4. The method as recited in any one of the preceding claims, wherein the porous structure is a fiber structure.

5. The method as recited in any one of the preceding claims, wherein the deposition of the first material provides a continuous coating on the porous structure.

6. The method as recited in any one of the preceding claims, wherein the ceramic article is substantially fully dense and substantially free of voids.

7. The method as recited in any one of the preceding claims, wherein the third processing technique includes one of the melt infiltration of the metallic material or the vapor infiltration of the metallic material, and/or
wherein the second processing technique includes the deposition of a preceramic polymer including a filler that chemically reacts with at least one of the first material and the third material.

8. The method as recited in any one of the preceding claims, wherein at least one of the first, second and third different processing techniques includes chemically reacting a precursor material deposited thereby with a residual amount of unreacted precursor material from another of the first, second and third different processing techniques.

9. The method as recited in any one of the preceding claims, wherein the first second and third different processing techniques are, respectively, the chemical vapor infiltration of the gas, the polymer infiltration and pyrolysis of the polymer and one of the melt infiltration of the metallic material or the vapor infiltration of the metallic material.

## Patentansprüche

1. Verfahren zur Herstellung eines keramischen Artikels, wobei das Verfahren Folgendes umfasst:
nacheinander Ablagern eines ersten, zweiten und dritten unterschiedlichen Materials innerhalb einer porösen Struktur unter Verwendung von jeweils einer ersten, zweiten und dritten unterschiedlichen Verarbeitungstechnik, wobei die erste und dritte Verarbeitungstechnik aus der Gruppe bestehend aus einer chemischen Dampfinfiltration eines Gases, einer Schmelzinfiltration eines metallischen Materials und einer Dampfinfiltration eines metallischen Materials ausgewählt sind, und wobei es sich bei der zweiten Verarbeitungstechnik um eine Polymerinfiltration und eine Pyrolyse unter Verwendung einer Aufheizungsgeschwindigkeit von 5 °C/min oder mehr, um einen keramischen Artikel zu bilden, handelt, wobei das erste, zweite und dritte unterschiedliche Material sich in mindestens einem der Folgenden unterscheiden:
Zusammensetzung und
Mikrostruktur,
wobei das Ablagern des ersten Materials derart gesteuert wird, dass es erste Resthohlräume in der porösen Struktur gibt, in die das zweite Material abgelagert wird und das Ablagern des zweiten Material derart gesteuert wird, dass es zweite Resthohlräume in der porösen Struktur gibt, in die das dritte Material abgelagert wird.

2. Verfahren nach Anspruch 1, ferner umfassend ein Auswählen von jeweiligen Zusammensetzungen von mindestens zwei Materialien des ersten, zweiten und dritten unterschiedlichen Materials dazu, während der Ablagerung miteinander reaktionsfähig zu sein, oder
ferner umfassend ein Auswählen von jeweiligen Zusammensetzungen von mindestens zweien des ersten, zweiten und dritten unterschiedlichen Materials dazu, während der Ablagerung chemisch inert miteinander zu sein.

3. Verfahren nach Anspruch 1 oder Anspruch 2, wobei die ersten Resthohlräume miteinander verbundene Poren sind, die nicht mit dem ersten Material gefüllt sind und die zweiten Resthohlräume Mikrorisse innerhalb des zweiten Materials sind, oder
wobei die ersten Resthohlräume und die zweiten Resthohlräume miteinander verbundene Poren sind, wobei die miteinander verbundenen Poren der zweiten Resthohlräume sich innerhalb des zweiten Materials befinden.

4. Verfahren nach einem der vorhergehenden Ansprüche, wobei die poröse Struktur eine Faserstruktur ist.

5. Verfahren nach einem der vorhergehenden Ansprüche, wobei die Ablagerung des ersten Materials eine kontinuierliche Beschichtung auf der porösen Struktur bereitstellt.

6. Verfahren nach einem der vorhergehenden Ansprüche, wobei der keramische Artikel im Wesentlichen vollständig dicht und im Wesentlichen frei von Hohlräumen ist.

7. Verfahren nach einem der vorhergehenden Ansprüche, wobei die dritte Verarbeitungstechnik eines von der Schmelzinfiltration des metallischen Materials oder der Dampfinfiltration des metallischen Materials beinhaltet, und/oder
wobei die zweite Verarbeitungstechnik das Ablagern eines präkeramischen Polymers beinhaltet, das ein Füllmaterial beinhaltet, das mit mindestens einem von dem ersten Material und dem dritten Material chemisch reagiert.

8. Verfahren nach einem der vorhergehenden Ansprüche, wobei mindestens eine von der ersten, zweiten und dritten unterschiedlichen Verarbeitungstechnik ein chemisches Reagieren eines Vorläufermaterials beinhaltet, das dadurch mit einer Restmenge eines unreagierten Vorläufermaterials aus einer anderen der ersten, zweiten und dritten unterschiedlichen Verarbeitungstechnik abgelagert wird.

9. Verfahren nach einem der vorhergehenden Ansprüche, wobei es sich bei der ersten, zweiten und dritten unterschiedlichen Verarbeitungstechnik jeweils um die chemische Dampfinfiltration des Gases, die Polymerinfiltration und Pyrolyse des Polymers und eines von der Schmelzinfiltration des metallischen Materials und der Dampfinfiltration des metallischen Materials handelt.

## Revendications

1. Procédé de fabrication d'un article en céramique, le procédé comprenant :
le dépôt en série de premier, deuxième et troisième matériaux différents dans une structure poreuse à l'aide, respectivement, de première, deuxième et troisième techniques de traitement différentes dans lequel les première et troisième techniques de traitement sont sélectionnées dans le groupe constitué de l'infiltration chimique en phase vapeur d'un gaz, l'infiltration en fusion d'un matériau métallique et l'infiltration de vapeur d'un matériau métallique, et la deuxième technique de traitement est l'infiltration de polymère et la pyrolyse à l'aide d'une vitesse de chauffage de 5 °C/min ou plus, pour former un article en céramique, les premier, deuxième et troisième matériaux différents différant par au moins l'un parmi :
une composition et
une microstructure,
le dépôt du premier matériau étant commandé de sorte qu'il y a des premiers vides résiduels dans la structure poreuse dans laquelle le deuxième matériau est déposé et le dépôt du deuxième matériau étant commandé de sorte qu'il y a des seconds vides résiduels dans la structure poreuse dans laquelle le troisième matériau est déposé.

2. Procédé selon la revendication 1, comprenant en outre la sélection de compositions respectives d'au moins deux matériaux parmi les premier, deuxième et troisième matériaux différents pour être réactifs l'un avec l'autre pendant le dépôt, ou
comprenant en outre la sélection de compositions respectives d'au moins deux des premier, deuxième et troisième matériaux différents pour être chimiquement inertes l'un avec l'autre pendant le dépôt.

3. Procédé selon la revendication 1 ou la revendication 2, dans lequel les premiers vides résiduels sont des pores interconnectés qui ne sont pas remplis par le premier matériau et les seconds vides résiduels sont des micro-fissures à l'intérieur du deuxième matériau, ou
dans lequel les premiers vides résiduels et les seconds vides résiduels sont des pores interconnectés, les pores interconnectés des seconds vides résiduels étant à l'intérieur du deuxième matériau.

4. Procédé selon l'une quelconque des revendications précédentes, dans lequel la structure poreuse est une structure fibreuse.

5. Procédé selon l'une quelconque des revendications précédentes, dans lequel le dépôt du premier matériau fournit un revêtement continu sur la structure poreuse.

6. Procédé selon l'une quelconque des revendications précédentes, dans lequel l'article en céramique est sensiblement entièrement dense et sensiblement exempt de vides.

7. Procédé selon l'une quelconque des revendications précédentes, dans lequel la troisième technique de traitement comporte l'une parmi l'infiltration en fusion du matériau métallique ou l'infiltration en phase vapeur du matériau métallique, et/ou
dans lequel la deuxième technique de traitement comporte le dépôt d'un polymère précéramique comportant une charge qui réagit chimiquement avec au moins l'un du premier matériau et du troisième matériau.

8. Procédé selon l'une quelconque des revendications précédentes, dans lequel au moins l'une des première, deuxième et troisième techniques de traitement différentes comporte la réaction chimique d'un matériau précurseur ainsi déposé avec une quantité résiduelle de matériau précurseur n'ayant pas réagi à partir d'une autre des premier, deuxième et troisième techniques de traitement différentes.

9. Procédé selon l'une quelconque des revendications précédentes, dans lequel les première, deuxième et troisième techniques de traitement différentes sont, respectivement, l'infiltration chimique en phase vapeur du gaz, l'infiltration du polymère et la pyrolyse du polymère et l'une des infiltrations en fusion du matériau métallique ou l'infiltration de vapeur du matériau métallique.
